# EUROPEAN PATENT APPLICATION

(11) **EP 4 539 173 A1**
(43) Date of publication of application: **16.04.2025**
(21) Application number: 22945955.7
(22) Date of filing: 03.11.2022
(51) Int. Cl.: H01M 8/0228, H01M 8/0206, H01M 8/0213

(54) **FUEL CELL BIPOLAR PLATE COATING MATERIAL HAVING HIGH CORROSION RESISTANCE AND HIGH CONDUCTIVITY CHARACTERISTICS, AND COATING METHOD**

(30) Priority: 07.06.2022 KR 20220068746
(71) Applicant: Hyundai Steel Company, Incheon 22525 (KR)
(72) Inventor: YANG, Won Seog, Gunpo-si Gyeonggi-do 15886 (KR)
(74) Representative: Viering, Jentschura & Partner mbB Patent- und Rechtsanwälte
(86) International application number: PCT/KR2022/017135
(87) International publication number: WO 2023/238996

(57) **Abstract**

The present invention relates to a fuel cell separator having corrosion resistance and high conductivity, and a fuel cell separator coating method, and provides a fuel cell separator comprising: a metal substrate; and a coating layer which is formed on the metal substrate, and which is composed of a mixture of a binder resin and a filler comprising a flake-like carbon material and a granular carbon material, wherein the filler is encompassed by the binder resin so as to be dispersed inside the coating layer, and the filler is exposed to the outside on the surface of the coating layer.

## Description

### [Technical Field]

The present disclosure relates to a fuel cell metal separator coating material capable of securing conductivity while suppressing surface corrosion, and a fuel cell metal separator coating method.

### [Background Art]

Recently, the demand for electric vehicles (EVs) or hydrogen fuel cell electric vehicles (FCEVs) to replace internal combustion engines (ICEs) has increased in response to global warming. Among them, hydrogen fuel cell electric vehicles have a chemical reaction that is the reverse of electrolysis. In other words, it is a power generation system that generates electricity (and heat) through the supply of hydrogen to drive a motor. Theoretically, hydrogen fuel cells may generate a voltage of 1.229 V, but due to various limitations, they have an operating voltage of 0.6 to 0.8 V. A hydrogen fuel cell stack comprises a bipolar plate, a gas diffusion layer (GDL), and a membrane electrode assembly (MEA) coated with a catalyst powder.

The redox reaction equations of the fuel cell are represented in (1) and (2).

(Hydrogen supply) H₂ → 2H⁺ + 2e⁻ E⁰ = 0 V vs SHE Electrochemical oxidation of hydrogen (Hydrogen Oxidative Reaction, HOR) ... (1)

(Oxygen supply) 1/2O₂ + 2H⁺ + 2e⁻ → H₂O E⁰ = 1.229 V _{vs SHE} Electrochemical reduction of oxygen (Oxygen Reductive Reaction, ORR) ... (2)

In addition to a high-potential environment, a corrosion environment in the fuel cell is a high corrosion environment due to a low pH, as in reaction equations (3) to (8). Radicals are generated by the reduction of metals (equations 3 and 4), and SO₄²⁻ and F⁻ are generated by degradation of a sulfonyl group and a C-F group of resins (Fenton Reaction) (reaction equations 5 to 8).

Fe²⁺ + H₂O₂ → Fe³⁺ + ·OH + OH⁻ ... (3)

Fe³⁺ + H₂O₂ → Fe²⁺ + ·OOH + H⁺ ... (4)

R-SO₄ + ·OH or ·OOH → ROH + SO₄²⁻... (5) → 2H₂O + SO₄²⁻ → 2H⁺ + SO₄²⁻ + 2OH⁻ ... (6)

R-C-F + ·OH or ·OOH → R-C-OH + F⁻... (7) → H₂O + F⁻ → H⁺ + F⁻ + OH⁻ ... (8)

The separator is a key component that connects multiple unit cells and constitutes a framework of a stack and requires a material that can withstand a pH of 4 or more. Experiments are being conducted in an environment of a pH of 1 to 3 and 0.6 to 0.0 V vs SCE even in actual corrosion tests. In such an environment, the material should exhibit a current density of 1 µA/cm² or less and an interfacial contact resistance of 10 mΩcm² or less (under pressure of 133 N/m) at an electrokinetic potential of 0.6 V vs SCE. In addition, the material is required to have a conductivity of 100 S/cm or more, and a metallic material exhibits a high initial conductivity of 104 s/cm or more, but has a problem that the conductivity is reduced due to corrosion.

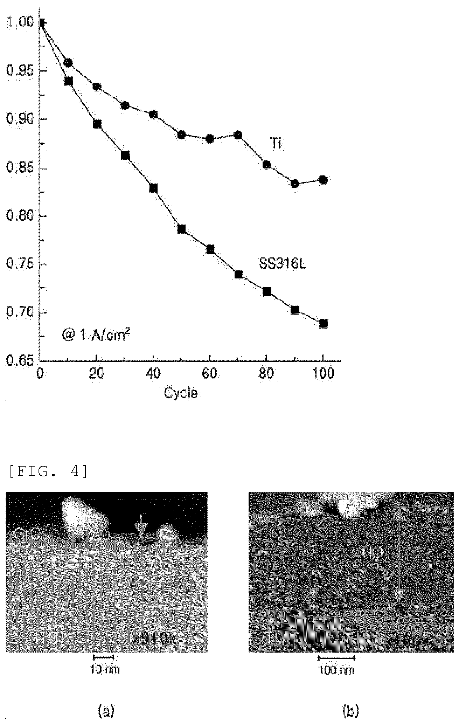

A titanium metallic material has excellent conductivity, but in a corrosive environment, TiO₂ on a surface layer of the titanium metallic material is formed with a thickness of about 200 nm, which is much larger than a passive thin film (5 nm) of stainless steel such as CrO₃ or Cr₃O₇ in the stainless steel, and thus needs to be controlled (see FIG. 4). In other words, a partially passivated growth thin film of stainless steel series are not applicable to lightweight materials such as Ti, Al, and Mg. Conventional thin film coatings such as physical vapor deposition (PVD) and chemical vapor deposition (CVD) are limited in application due to coating time and economic issues. In addition, a thin film coating disclosed in Japanese Patent No. 06943781 is applied by a vacuum-high temperature process, which is difficult to apply easily.

### [Disclosure]

### [Technical Problem]

The present disclosure has been made in an effort to solve such conventional problems, and an object of the present disclosure is to provide a fuel cell separator that has high penetration resistance to external materials which leads to suppress surface corrosion and ensures conductivity. However, these challenges are exemplary and the scope of the present disclosure is not limited thereto.

### [Technical Solution]

According to an aspect of the present disclosure, there is provided a fuel cell separator.

In an embodiment, a fuel cell separator comprises a metal substrate, and a coating layer which is formed on the metal substrate, and which is composed of a mixture of a binder resin and a filler comprising a flake-like carbon material and a granular carbon material, wherein the filler is encompassed by the binder resin so as to be dispersed inside the coating layer, and the filler is exposed to an outside on a surface of the coating layer.

In an embodiment, the filler may further comprise a metal powder.

In an embodiment, the filler may be at least one selected from the group consisting of graphene, carbon nanotubes, graphite, and carbon black.

In an embodiment, the coating layer may have a thickness of 0.01 to 10 µm.

In an embodiment, the filler in the coating layer may have a density of 10 to 10⁴ EA/cm².

In an embodiment, the filler may be arranged at an angle of 30 to 90 degrees, with respect to a surface of the substrate.

In an embodiment, the metal substrate may be formed of titanium or a titanium alloy.

In an embodiment, the binder resin may be a linear or branched polymer.

In an embodiment, the metal powder may be a stainless steel powder.

According to another aspect of the present disclosure, there is provided a fuel cell separator coating method.

In an embodiment, the fuel cell separator coating method comprises: mixing 10 to 70 wt% of a binder resin and 30 to 90 wt% of a filler comprising a flake-like carbon material and a granular carbon material with each other, applying a mixture on a substrate and performing heat curing, and brushing a surface of a cured substrate, wherein the flake-like carbon material and the granular carbon material may be mixed with each other in a weight ratio of 7:3 to 8:2.

In an embodiment, the filler further may comprise a metal powder, and 60 to 80 wt% of the flake-like carbon material, 20 to 30 wt% of the granular carbon material, and 0.01 to 10 wt% of the metal powder may be mixed with each other.

In an embodiment, the filler may be at least one selected from the group consisting of graphene, carbon nanotubes, graphite, and carbon black.

In an embodiment, the substrate may be formed of titanium or a titanium alloy.

In an embodiment, the binder resin may be a linear or branched polymer.

In an embodiment, the metal powder may be a stainless steel powder.

### [Advantageous Effects]

According to the embodiment of the present disclosure as described above, durability of a stack is improved by providing a separator that possesses high corrosion resistant and high conductivity. Furthermore, by providing a paint-type coating method, it is possible to replace the existing vapor deposition type and electroplating type coating and secure cost-effectiveness compared to the existing methods. In addition, it is applicable to a PEMFC separator coating for automotive, aviation, and stationary, which has the effect of expanding the range of choices for separator materials.

Of course, this effect does not limit the scope of the present disclosure.

### [Description of Drawings]

FIG. 1 is a schematic diagram illustrating a structure of a coating layer according to an embodiment of the present disclosure.
FIG. 2 is a schematic diagram illustrating the condition of a filler in a coating layer according to an embodiment of the present disclosure.
FIG. 3 is a graph comparing changes in stack performance according to the types of metal substrates in an embodiment of the present disclosure.
FIG. 4 is a photograph comparing corrosion environment after heat treatment according to the types of metal substrates in an embodiment of the present disclosure.

### [Best Mode]

Hereinafter, various embodiments of the present disclosure will be described in detail with reference to the accompanying drawings. The embodiments of the present disclosure are intended to provide a more complete description of the present disclosure to those having ordinary knowledge in the art, and the following embodiments may be modified in many other forms, and the scope of the present disclosure is not limited to the following embodiments. Rather, these embodiments are provided to offer a more thorough and complete disclosure and to fully convey the ideas of the present disclosure to those skilled in the art. In addition, the thickness or size of each layer in the drawings has been exaggerated for convenience and clarity of description.

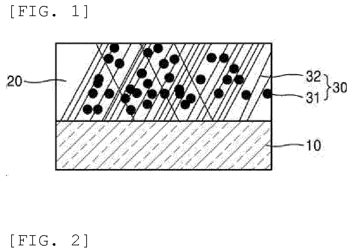

FIG. 1 illustrates a fuel cell separator according to an embodiment of the present disclosure.

In FIG. 1, a coating layer is formed on a metal substrate 10, wherein the coating layer is composed of a mixture of a binder resin 20 and a filler 30 comprising a flake-like carbon material 32 and a granular carbon material 31. The coating layer may be formed by applying a composition in which 10 to 70 wt% of the binder resin 20 and 30 to 90 wt% of the filler 30 comprising a flake-like carbon material and a granular carbon material are mixed on the substrate. The method of applying the composition may include, but is not limited to, a pre-coating method, a nano-spray method, etc.

The binder resin 20 serves to bind the filler 30 composed of a carbon material, and is an important factor in determining coating properties. If the content of the binder resin is higher than 70 wt%, the surface resistance is too high, and if the content of the binder resin is lower than 10 wt%, the mechanical properties of the coating may not be secured. Therefore, it is preferable to mix the binder resin in a ratio of 10 to 70 wt%.

The type of binder resin 20 may include, but is not limited to, conventional resins such as polyacrylic, polyphenolic, and polyester resin, and conductive resins such as polyaniline, polyphenylene sulfide (PPS), and polyacetylene. The binder resin composition may be blended with various components, such as solvents, curing agents, pigments, pigment dispersants, additives, etc. The binder resin composition may further comprise a polymerization initiator, such as a thermal initiator, a photoinitiator, etc. to facilitate polymerization.

The binder resin 20 may be prepared by subjecting the binder resin composition as described above to a heat curing or photo curing process. For example, a curing reaction may be a solid phase reaction (solid polymerization) using a blocked isocyanate. The curing reaction may occur as a blocking agent, such as ketone, alcohol, etc. is dissociated. In the case of a heat curing reaction, the reaction may proceed at 20 to 250° C. After curing, the binder resin 20 may have a conductivity in the rage of 10⁻⁴ to 10 S/cm.

The binder resin may be a linear or branched polymer. The more branched the polymer, the higher the corrosion resistance, but there is a trade-off in terms of lower conductivity. Therefore, in the embodiment of the present disclosure, a linear polymer may be used, but a branched polymer may be appropriately mixed and used. For example, branches may be introduced by grafting monomers onto a linear polymer skeleton.

A molecular weight and a viscosity of the binder resin 20 may be adjusted so that the binder resin 20 uniformly surrounds the fillers so allow the fillers to exist in a uniformly dispersed state without settling. The dispersibility of the filler is important in determining the conductivity of the separator, and therefore, it is necessary to uniformly disperse the filler in the binder resin. The viscosity of the mixture increases as the molecular weight of the binder resin increases, and therefore, it is desirable that the molecular weight of the binder resin is adjusted between 100 and 5,000 MW.

In the case of organic paint type coatings, corrosion resistance is excellent, but resistance is high because resistance of the resins and connectivity of the conductive fillers are poor. Therefore, in an embodiment of the present disclosure, a mixture of binder resin and filler is applied to a substrate and then heat-cured to reduce a thickness of the coating by heat-shrinkage, thereby allowing the fillers to adhere to each other. The thickness of the coating layer may be 10 µm or less to suppress an increase in resistance as a thickness of coating increases.

It is important to adjust the type and orientation of the fillers 30 in order to reduce the surface resistance of the separator. The filler 30 may be composed of carbon materials, such as graphene, carbon nanotubes (CNTs), graphite, and carbon black, and may further comprise a metal powder if necessary. The shape of the filler may affect the formation of a network for electron transport. In an embodiment, highly conductive flake-like graphene and carbon nanotubes may be used to form a needle or flaky structure for multiple point-to-face contacts.

Granular graphite or carbon black may be mixed to prevent the flake-like carbon material from being separated from each other due to the binder resin, resulting in reduced conductivity. The granular carbon material may be partially inserted into the surface of the flake-like carbon materials and serves to reduce a distance between the flake-like carbon materials, thereby forming a network path for electron transport. Here, the flake-like carbon material and the granular carbon material may be mixed in a weight ratio of 7:3 to 8:2.

In another embodiment, the filler may further comprise a metal powder in order to enhance the conductivity of the filler. The metal powder may be, but is not limited to, stainless steel or a precious metal series. For example, the conductivity of the filler may be enhanced by mixing 60 to 80 wt% of the flake-like carbon material, 20 to 30 wt% of the granular carbon material, and 0.01 to 10 wt% of the metal powder.

In order to lower the surface resistance of the separator, the flake-like carbon material constituting the filler 30 may be orientated at an angle of 30 to 90 degrees, more preferably 40 to 90 degrees, with respect to a surface of the metal substrate 10. If the fillers are randomly arranged or orientated at a low angle, the flow of current may become uneven and the flow of current may be partially interrupted by polymer resin having insulating properties, resulting in increased contact resistance and reduced electrical conductivity. In an embodiment, a step of coating a composition comprising a filler on a substrate and then orienting the filler so as to be inclined at angle of 30° or more may be further included. For example, during a coating process, a magnetic or electric field generator may be connected to a coater to generate a magnetic or electric field around the filler to align the direction of the filler, or a physical force may be applied to the coating layer to orientate the filler to be 30° or more. This allows an electric flow in the coating layer to be controlled smoothly.

In an embodiment, the filler may have a density of 10 to 10⁴ EA/cm², more preferably 100 to 10⁴ EA/cm², thereby achieving high conductivity and low contact resistance. The carbon material or a paste mixed with carbon material and metal may have a viscosity of 10³ to 10⁴ S/cm.

The fuel cell separator manufactured in according to an embodiment of the present disclosure may exhibit a conductivity of 500 S/cm or more, and may have a contact resistance value of 35 mΩ/cm² or less with no pressure applied and a contact resistance value of 5 mΩ/cm² or less with 133 N/cm² pressure applied.

The amount of filler mixed with the binder resin is preferably 30 to 90 wt%. If the content of filler is less than 30 wt%, it is difficult to expect an improvement in conductivity because a network path for electron transport cannot be formed. If the content of filler exceeds 90 wt%, the filler has poor dispersibility and molding processability.

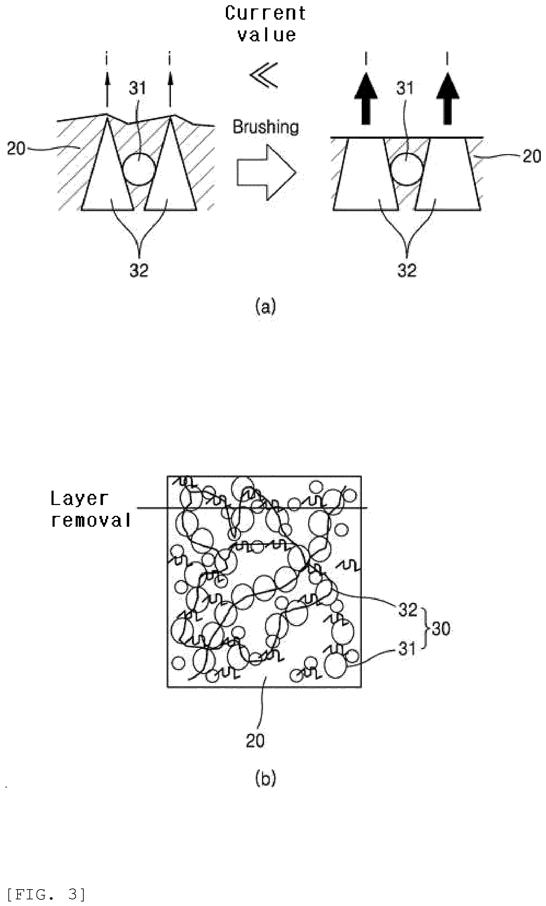

FIG. 2 is a schematic diagram illustrating brushing the surface of the coating layer to expose the filler. The filler may be exposed to an outside by removing the binder resin that surrounds the filler on the surface of the coating layer. For example, the number of brushing may be 300 to 2,000 times. FIG. 2(a) illustrates that the filler is exposed to the surface of the coating layer through brushing, and the conductivity is improved. FIG. 2(b) illustrates that a part of the binder resin positioned on the outermost layer is removed by removing a part of the coating layer, thereby increasing a filler area. Therefore, the filler is encompassed by the binder resin so as to be dispersed inside the coating layer, and the filler is exposed to an outside on a surface of the coating layer.

The metal substrate 10 may be formed of titanium or a titanium alloy. Titanium (Ti) materials are more expensive than stainless steel materials, but may exhibit higher stack performance. Using the same membrane electrode assembly (MEA) and at a current density of 1 A/cm², an absolute ratio of performance (power) of separators with stainless steel and Ti materials is as shown in FIG. 3. After 100 cycles, stainless steel has an output of 0.6897 and Ti has an output of 0.8379, indicating the superior durability of the titanium material. In addition, stainless steel has a specific gravity of 7.9, while Ti has a lower specific gravity of 4.6, resulting in a weight reduction of 40% or more when applied with the same thickness.

As described above, the fuel cell separator according to embodiments of the present disclosure may have excellent corrosion resistance, low contact resistance, and excellent electrical conductivity.

The present disclosure has been described with reference to the embodiments shown in the drawings, but these are only illustrative, and those having ordinary knowledge in the art will understand that various modifications and other equivalent embodiments are possible from them. Therefore, the true technical protection scope of the present disclosure should be determined by the technical ideas of the appended patent claims.

### (Description of symbols)

- 10:: Metal substrate
- 20:: Binder resin
- 30:: Filler
- 31:: Granular carbon material
- 32:: Flake-like carbon material

### [Industrial Applicability]

The present disclosure can be utilized in the field of fuel cells, the field of fuel cell metal separators, and the field of metal separator coatings and coating materials, and can improve the reliability and competitiveness of products.

## Claims

1. A fuel cell separator, comprising:
a metal substrate; and
a coating layer which is formed on the metal substrate, and which is composed of a mixture of a binder resin and a filler comprising a flake-like carbon material and a granular carbon material,
wherein the filler is encompassed by the binder resin so as to be dispersed inside the coating layer, and
the filler is exposed to an outside on a surface of the coating layer.

2. The fuel cell separator of claim 1, wherein the filler further comprises a metal powder.

3. The fuel cell separator of claim 1, wherein the filler is at least one selected from the group consisting of graphene, carbon nanotubes, graphite, and carbon black.

4. The fuel cell separator of claim 1, wherein the coating layer has a thickness of 0.01 to 10 µm.

5. The fuel cell separator of claim 1, wherein the filler in the coating layer has a density of 10 to 10⁴ EA/cm².

6. The fuel cell separator of claim 1, wherein the filler is arranged at an angle of 30 to 90° , with respect to a surface of the substrate.

7. The fuel cell separator of claim 1, wherein the metal substrate is formed of titanium or a titanium alloy.

8. The fuel cell separator of claim 1, wherein the binder resin is a linear or branched polymer.

9. The fuel cell separator of claim 2, wherein the metal powder is a stainless steel powder.

10. A fuel cell separator coating method, comprising:
mixing 10 to 70 wt% of a binder resin and 30 to 90 wt% of a filler consisting of a flake-like carbon material and a granular carbon material;
applying a mixture on a substrate and performing heat curing; and
brushing a surface of a cured coating layer on the substrate to expose the filler existing on the surface of the coating layer to an outside;
wherein the flake-like carbon material and the granular carbon material are mixed with each other in a weight ratio of 7:3 to 8:2.

11. The fuel cell separator coating method of claim 10, wherein the filler further comprises a metal powder, and 60 to 80 wt% of the flake-like carbon material, 20 to 30 wt% of the granular carbon material, and 0.01 to 10 wt% of the metal powder are mixed with each other.

12. The fuel cell separator coating method of claim 10, wherein the filler is at least one selected from the group consisting of graphene, carbon nanotubes, graphite, and carbon black.

13. The fuel cell separator coating method of claim 10, wherein the substrate is formed of titanium or a titanium alloy.

14. The fuel cell separator coating method of claim 10, wherein the binder resin is a linear or branched polymer.

15. The fuel cell separator coating method of claim 11, wherein the metal powder is a stainless steel powder.
